# EUROPEAN PATENT SPECIFICATION

(11) **EP 4 079 584 B1**
(45) Date of publication and mention of the grant of the patent: **08.11.2023**
(21) Application number: 22167992.1
(22) Date of filing: 12.04.2022
(51) Int. Cl.: B60S 1/38

(54) **WINDSHIELD WIPER STRUCTURE**
SCHEIBENWISCHERSTRUKTUR
STRUCTURE D'ESSUIE-GLACE

(30) Priority: 20.04.2021 CN 202110424614
(43) Date of publication of application: 26.10.2022
(73) Proprietor: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW)
(74) Representative: 2K Patentanwälte Blasberg Kewitz & Reichel

(56) References cited:
- EP-A1- 3 398 821
- DE-U1-202012 103 550
- US-A1- 2015 059 116

## Description

### BACKGROUND

### Technical Field

The disclosure relates to a windshield wiper, particularly to a windshield wiper structure which uniformly exerts pressing force on a windshield of a vehicle.

### Related Art

A windshield wiper, which is connected to a drive arm of a vehicle and disposed on the outside of a vehicle's windshield, is a device used to remove rain or debris from the windshield by the drive arm driving a wiper blade to swing on the windshield.

In a related-art windshield wiper structure, the bottom of the fixing base connecting the drive arm is a hollow portion. The metal elastic sheet does not exert pressing force at the hollow portion of the fixing base so that the blade lacks pressing force at the fixing base and is unable to press a glass surface uniformly. As a result, a close connection cannot be maintained between a blade and a windshield and rain or debris on the glass cannot be completely removed. Therefore, how to keep a close connection between a blade and a windshield to completely remove rain is a motivation of the inventor. US-A-2015/0059116 shows a similar wiper structure.

The invention is set out in the appended set of claims.

An object of the disclosure is to provide a windshield wiper structure which may reinforce pressing force. The blade of the windshield wiper structure may be uniformly pressed on a glass surface to contact with the glass surface to remove rain or debris from the glass surface.

To accomplish the above object, the disclosure provides a windshield wiper structure with a reinforced pressing force, which includes a fixing frame, a support plate, a blade and at least one pressing strip. The fixing frame includes a fixing base and a pivot disposed on the fixing base. The support plate is connected on a bottom side of the fixing base and extended oppositely from the fixing base. The blade is connected to a bottom surface of the support plate. The pressing strip is disposed on the bottom side of the fixing base and presses the blade toward a direction away from the fixing base to contact with a glass surface.

In comparison with the related-art windshield wiper structure which lacks pressing force at the fixing base, the disclosure includes the pressing strip disposed on the fixing base. The pressing strip presses the blade toward a direction away from the fixing base to make the blade contact with a glass surface to remove rain or debris from the glass surface. The pressing strip may be formed in a single piece with the support plate and is adjacent to the fixing base, or is disposed on the bottom side of the fixing base by riveting, fastening or welding. In addition, the pressing strip may be directly connected to the bottom portion of the fixing base by riveting, fastening or welding. Thus, the pressing force exerted by the support plate at the hollow position of the bottom portion of the fixing base may be reinforced. This makes the support plate more evenly press the blade to contact with the glass surface so as to remove rain or debris on the glass surface.

In view of this, the inventors have devoted themselves to the above-mentioned related art, researched intensively and cooperated with the application of science to try to solve the above-mentioned problems. Finally, the invention which is reasonable and effective to overcome the above drawbacks is provided.

### BRIEF DESCRIPTION OF THE DRAWINGS

FIG 1 is a perspective view of the windshield wiper structure with a reinforced pressing force of the disclosure;
FIGS. 2 and 3 are exploded views of the windshield wiper structure with a reinforced pressing force of the disclosure;
FIG 4 is a schematic view of the pressing strip of the windshield wiper structure of the disclosure;
FIG 5 is a cross-sectional view of the pressing strip of the windshield wiper structure of the disclosure;
FIG 6 is a cross-sectional view of another embodiment of the windshield wiper structure with a reinforced pressing force of the disclosure; and
FIG 7 is a cross-sectional view of still another embodiment of the windshield wiper structure with a reinforced pressing force of the disclosure.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

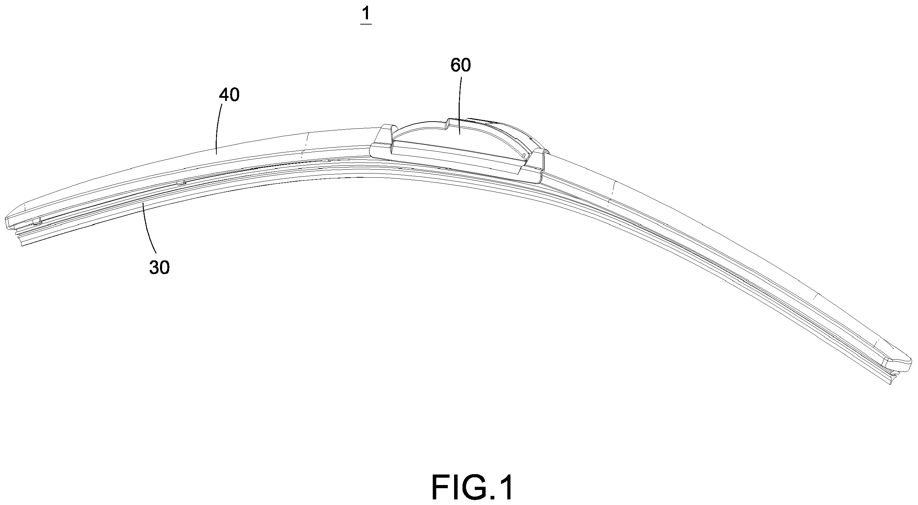

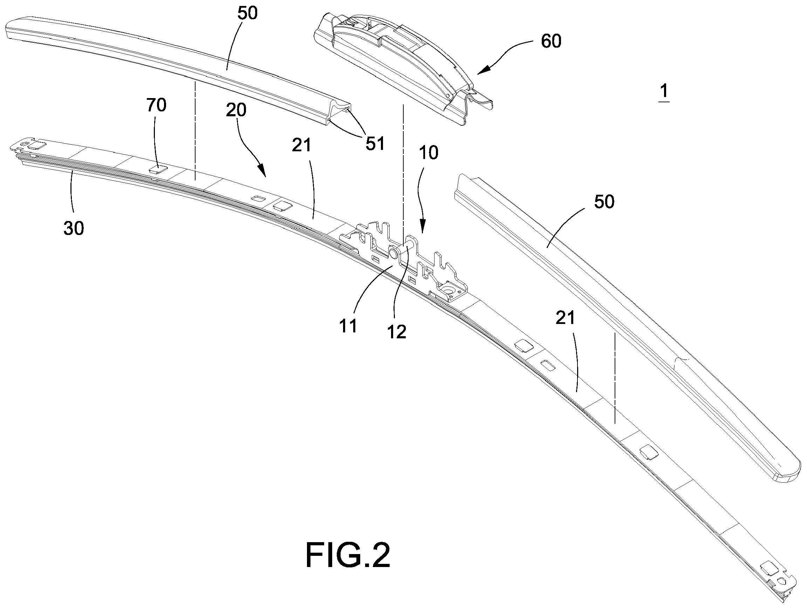

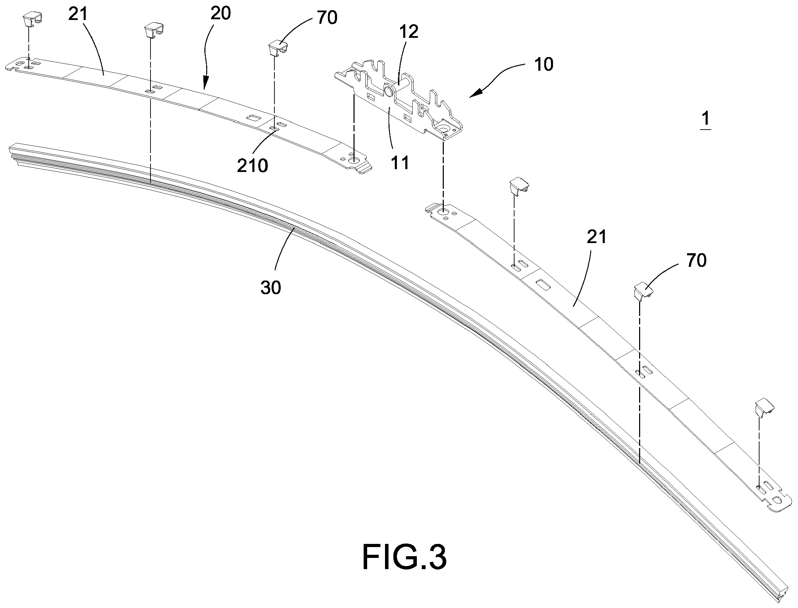

Please refer to FIGS. 1-3, which are a perspective view and two exploded views of the windshield wiper structure with a reinforced pressing force of the disclosure. The windshield wiper structure 1 with a reinforced pressing force of the disclosure includes a fixing frame 10, a support plate 20, a blade 30 and at least one pressing strip 40. The support plate 20 is connected on a bottom side of the fixing frame 10. The blade 30 is connected to a bottom surface of the support plate 20. The pressing strip 40 is disposed on a bottom side of the fixing frame 10. Therefore, the windshield wiper structure 1 with a reinforced pressing force is configured by the aforementioned elements.

The fixing frame 10 includes a fixing base 11 and a pivot 12 disposed on the fixing base 11. The pivot 12 is used for connecting a drive arm (not shown in figures) to drive the windshield wiper structure 1 to remove rain or debris on a glass surface.

The support plate 20 is made of metal to possess flexible deformation capacity. The support plate 20 is connected on a bottom side of the fixing base 11 and extended oppositely from the fixing base 11. In this embodiment, the support plate 20 includes a pair of elastic sheets 21 extended oppositely from the fixing base 11.

The blade 30 is made of rubber and is connected on the bottom surface of the support plate 20. The blade 30 is pressed by the support plate 20 to contact with a glass surface.

Also, the pressing strip 40 is disposed on the bottom side of the fixing base 11 and presses the blade 30 toward a direction away from the fixing base 11 to contact with a glass surface (not shown in figures).

In one embodiment of the disclosure, the windshield wiper structure 1 further includes a pair of covers 50, an accessory seat 60 and multiple engaging frames 70. The pair of covers 50 correspondingly covers the pair of elastic sheets 21. Each cover 50 has a pair of troughs 51. Two sides of each elastic sheet 21 pass through the pair of troughs 51 for connecting on the support plate 20. The accessory seat 60 is mounted on the fixing base 11 and sandwiched between the pair of covers 50.

In this embodiment, each of the engaging frames 70 is a U-shaped fastener. Each elastic sheet 21 has multiple insert slots 210 disposed spacedly. The engaging frames 70 pass through the insert slots 210 respectively to connect with the blade 30. As a result, the top of the blade 30 may be fastened to the engaging frames 70. The blade 30 is mounted on the bottom surface of the support plate 20 through the engaging frames 70.

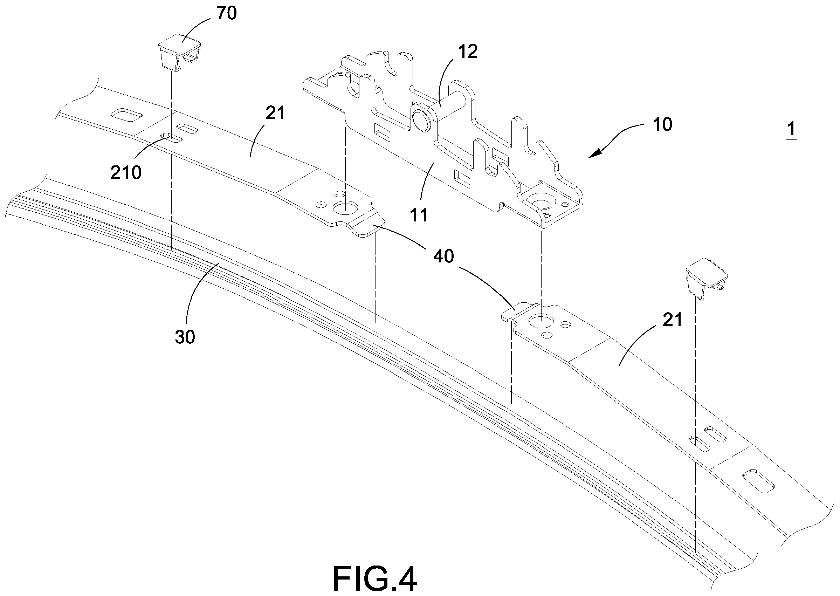

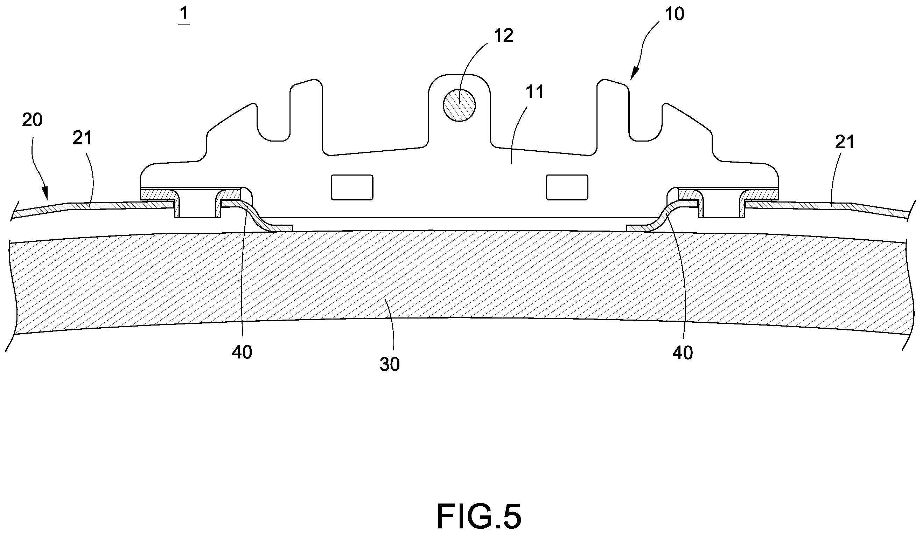

Please refer to FIGS. 4 and 5, which are a schematic view and a cross-sectional view of the pressing strip of the windshield wiper structure of the disclosure. In an embodiment of the disclosure, the pressing strip 40 is a flexible bent strip. The support plate 20 includes a pair of elastic sheets 21, and the pressing strip 40 is a pair in number. The pair of pressing strips 40 is separately fixed on the pair of elastic sheets 21 and is adjacent to the fixing base 11. In detail, the pressing strip 40 is located at an end of the elastic sheet 21, and the pressing strip 40 and the elastic sheet 21 are formed in a single piece.

The bottom of the fixing base 11 is a hollow portion and the pair of elastic sheets 21 is separately fixed on two sides of the fixing base 11, so the support plate 20 does not press the blade 30 at the middle of the fixing base 11. Thus, the support plate 20 lacks pressing force at the position of the fixing base 11. Accordingly, the windshield wiper structure 1 of the disclosure arranges the pressing strip 40 under the fixing base 11 to reinforce the pressing force exerted by the support plate 20 at the position of the fixing base 11. This makes the support plate 20 more evenly press the blade 30 to contact with the glass surface so as to remove rain or debris on the glass surface.

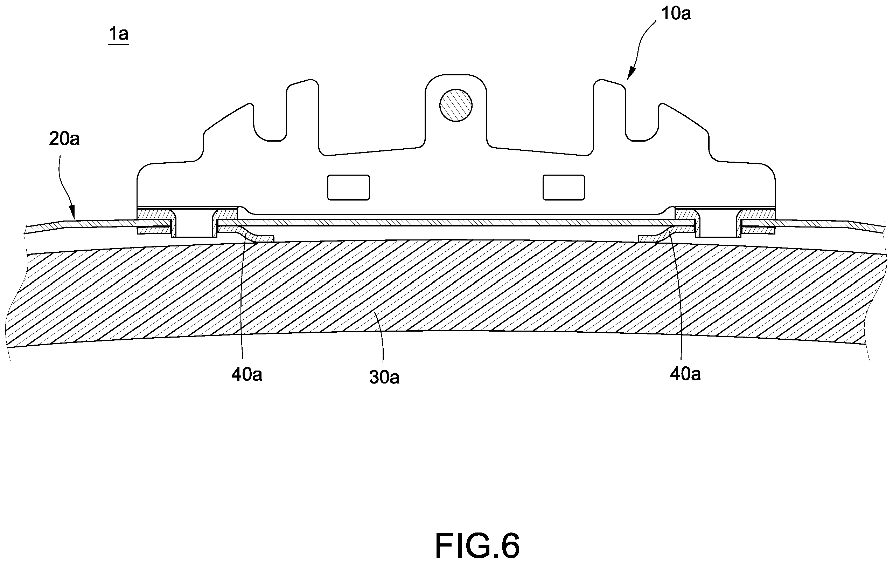

Please refer to FIG 6, which is a cross-sectional view of another embodiment of the windshield wiper structure with a reinforced pressing force of the disclosure. This embodiment is similar to the above embodiment. The windshield wiper structure 1a includes a fixing frame 10a, a support plate 20a, a blade 30a and at least one pressing strip 40a. The difference is the arrangement of the support plate 20a and the pressing strip 40a.

In this embodiment, the support plate 20a is a single piece metal elastic sheet which is extended oppositely from the fixing frame 10a. In addition, the pressing strip 40a is a pair in number. The pair of pressing strips 40a is disposed on the bottom side of the fixing frame 10a correspondingly. The pressing strip 40a may be disposed on the bottom side of the fixing frame 10a by riveting, fastening or welding.

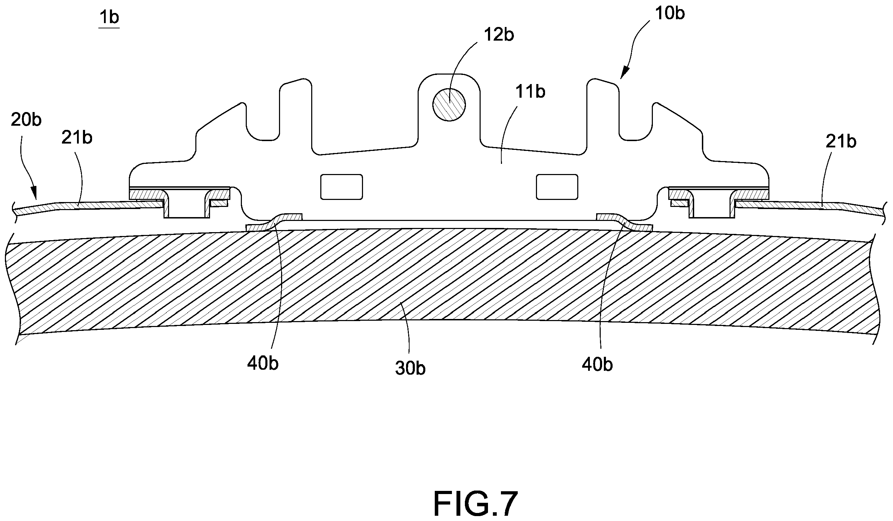

Please refer to FIG 7, which is a cross-sectional view of still another embodiment of the windshield wiper structure with a reinforced pressing force of the disclosure. This embodiment is similar to the above embodiment. The windshield wiper structure 1b includes a fixing frame 10b, a support plate 20b, a blade 30b and at least one pressing strip 40b. The difference is the arrangement of the support plate 20b and the pressing strip 40b.

In this embodiment, the fixing frame 10b includes a fixing base 11b and a pivot 12b. The support plate 20b includes a pair of elastic sheets 21b extended oppositely from the fixing frame 10b. In addition, the pressing strip 40b is a pair in number. The pair of pressing strips 40b is connected to the bottom portion of the fixing base 11b and located on two sides of the fixing frame 10b. Similarly, the assembling manner of the pair of pressing strips 40b is not limited, it may be disposed on the bottom side of the fixing base 11b by riveting, fastening or welding.

## Claims

1. A windshield wiper structure (1) with a reinforced pressing force, the windshield wiper structure (1) comprising:
a fixing frame (10), comprising a fixing base (11) and a pivot (12) disposed on the fixing base (11);
a support plate (20), connected on a bottom side of the fixing base (11), and extended oppositely from the fixing base (11);
a blade (30), connected to a bottom surface of the support plate (20); and
**characterized by** further comprising
at least one pressing strip (40), disposed on the bottom side of the fixing base (11), and pressing the blade (30) toward a direction away from the fixing base (11) to contact with a glass surface.

2. The windshield wiper structure (1) of claim 1, further comprising: a pair of covers (50), wherein the support plate (20) comprises a pair of elastic sheets (21) extended oppositely from the fixing base (11), and the pair of covers (50) correspondingly covers the pair of elastic sheets (21).

3. The windshield wiper structure (1) of claim 2, wherein each cover (50) comprises a pair of troughs (51), and two sides of each elastic sheet (21) separately pass through the pair of troughs (51).

4. The windshield wiper structure (1) of claim 2, further comprising: an accessory seat (60), mounted on the fixing base (11) and sandwiched between the pair of covers (50).

5. The windshield wiper structure (1) of claim 1, further comprising: multiple engaging frames (70), and the blade (30) being mounted on the bottom surface of the support plate (20) through the engaging frames (70).

6. The windshield wiper structure (1) of claim 5, wherein each elastic sheet (21) comprises multiple insert slots (210) disposed spacedly, and the engaging frames (70) pass through the insert slots (210) respectively to connect with the blade (30).

7. The windshield wiper structure (1) of claim 1, wherein the pressing strip (40) comprises a flexible bent sheet.

8. The windshield wiper structure (1) of claim 1, wherein the support plate (20) comprises a pair of elastic sheets (21) extended oppositely from the fixing base (11), the at least one pressing strip (40) is a pair in number, and the pair of pressing strips (40) are separately connected on the pair of elastic sheets (21) and are adjacent to the fixing base (11).

9. The windshield wiper structure (1) of claim 8, wherein the pressing strip is located on an end of the elastic sheet (21), and the pressing strip (40) and the elastic sheet (21) are formed in a single piece.

10. The windshield wiper structure (1) of claim 1, wherein the support plate (20) comprises a pair of elastic sheets (21) extended oppositely from the fixing base (11), the at least one pressing strip (40) is a pair in number, and the pair of pressing strips (40) are connected on a bottom portion of the fixing base (11) and are located on two sides of the fixing frame (11) correspondingly.

## Patentansprüche

1. Scheibenwischerstruktur (1) mit einer verstärkten Andruckkraft, wobei die Scheibenwischerstruktur (1) umfasst:
einen Befestigungsrahmen (10), der eine Befestigungsbasis (11) und einen an der Befestigungsbasis (11) angeordneten Drehzapfen (12) umfasst;
eine Trägerplatte (20), die mit einer Unterseite der Befestigungsbasis (11) verbunden ist und sich von der Befestigungsbasis (11) aus in entgegengesetzter Richtung erstreckt
ein Wischerblatt (30), das mit einer Unterseite der Trägerplatte (20) verbunden ist; und
**dadurch gekennzeichnet, dass** diese weiterhin umfasst
mindestens einen Andruckstreifen (40), der an der Unterseite der Befestigungsbasis (11) angeordnet ist und die Wischerblatt (30) in eine Richtung weg von der Befestigungsbasis (11) drückt, um mit einer Glasoberfläche in Kontakt zu gelangen.

2. Scheibenwischerstruktur (1) nach Anspruch 1, weiterhin umfassend: ein Paar von Abdeckungen (50), wobei die Trägerplatte (20) ein Paar von elastischen Platten (21) umfasst, die sich gegenüberliegend von der Befestigungsbasis (11) erstrecken, und das Paar von Abdeckungen (50) das Paar von elastischen Platten (21) entsprechend abdeckt.

3. Scheibenwischerstruktur (1) nach Anspruch 2, wobei jede Abdeckung (50) ein Paar von Vertiefungen (51) umfasst und zwei Seiten jeder elastischen Platte (21) getrennt durch das Paar von Vertiefungen (51) verlaufen.

4. Scheibenwischerstruktur (1) nach Anspruch 2, weiterhin umfassend: einen Zusatzsattel (60), der an der Befestigungsbasis (11) angebracht und zwischen dem Paar von Abdeckungen (50) angeordnet ist.

5. Scheibenwischerstruktur (1) nach Anspruch 1, weiterhin umfassend: mehrere Eingriffsrahmen (70), und wobei das Wischerblatt (30) durch die Eingriffsrahmen (70) an der Unterseite der Trägerplatte (20) befestigt ist.

6. Scheibenwischerstruktur (1) nach Anspruch 5, wobei jede elastische Platte (21) mehrere zueinander beabstandet angeordnete Einführschlitze (210) aufweist und die Eingriffsrahmen (70) sich jeweils durch die Einführschlitze (210) hindurch erstrecken, um eine Verbindung mit dem Wischerblatt (30) herzustellen.

7. Scheibenwischerstruktur (1) nach Anspruch 1, wobei der Andruckstreifen (40) ein flexibles, gebogenes Blech umfasst.

8. Scheibenwischerstruktur (1) nach Anspruch 1, wobei die Trägerplatte (20) ein Paar elastischer Platten (21) umfasst, die sich von der Befestigungsbasis (11) aus gegenüberliegend erstrecken, der mindestens eine Andruckstreifen (40) ein Paar ist und das Paar Andruckstreifen (40) separat mit dem Paar von elastischen Platten (21) verbunden ist und an die Befestigungsbasis (11) angrenzt.

9. Scheibenwischerstruktur (1) nach Anspruch 8, wobei der Andruckstreifen an einem Ende der elastischen Platte (21) angeordnet ist und der Andruckstreifen (40) und die elastische Platte (21) in einem einzigen Stück ausgebildet sind.

10. Scheibenwischerstruktur (1) nach Anspruch 1, wobei die Trägerplatte (20) ein Paar von elastischen Platten (21) umfasst, die sich gegenüberliegend von der Befestigungsbasis (11) erstrecken, der mindestens eine Andruckstreifen (40) ein Paar ist und das Paar von Andruckstreifen (40) an einem unteren Abschnitt der Befestigungsbasis (11) verbunden ist und entsprechend an zwei Seiten des Befestigungsrahmens (11) angeordnet ist.

## Revendications

1. Une structure d'essuie-glace (1) avec une force de pression renforcée, la structure d'essuie-glace (1) comprenant :
un cadre de fixation (10), comprenant une base de fixation (11) et un pivot (12) disposé sur la base de fixation (11) ;
une plaque de support (20), reliée à un côté inférieur de la base de fixation (11), et étendue à l'opposé de la base de fixation (11) ;
une lame (30), reliée à la surface inférieure de la plaque de support (20) ; et
**caractérisé par le fait qu'**il comprend en outre
au moins une bande de pression (40), disposée sur la face inférieure de la base de fixation (11), et pressant la lame (30) dans une direction opposée à la base de fixation (11) pour qu'elle entre en contact avec une surface en verre.

2. La structure d'essuie-glace (1) de la revendication 1, comprenant en outre : une paire de couvercles (50), dans laquelle la plaque de support (20) comprend une paire de feuilles élastiques (21) étendues à l'opposé de la base de fixation (11), et la paire de couvercles (50) couvre de manière correspondante la paire de feuilles élastiques (21).

3. La structure d'essuie-glace (1) de la revendication 2, dans laquelle chaque couvercle (50) comprend une paire d'auges (51), et deux côtés de chaque feuille élastique (21) passent séparément à travers la paire d'auges (51).

4. La structure d'essuie-glace (1) de la revendication 2, comprenant en outre : un siège d'accessoire (60), monté sur la base de fixation (11) et pris en sandwich entre la paire de couvercles (50).

5. La structure d'essuie-glace (1) de la revendication 1, comprenant en outre : plusieurs cadres d'engagement (70), et le balai (30) étant monté sur la surface inférieure de la plaque de support (20) à travers les cadres d'engagement (70).

6. La structure d'essuie-glace (1) de la revendication 5, dans laquelle chaque feuille élastique (21) comprend plusieurs fentes d'insertion (210) disposées de manière espacée, et les cadres d'engagement (70) passent à travers les fentes d'insertion (210) respectivement pour se connecter avec le balai (30).

7. La structure d'essuie-glace (1) de la revendication 1, dans laquelle la bande de pression (40) comprend une feuille flexible pliée.

8. La structure d'essuie-glace (1) de la revendication 1, dans laquelle la plaque de support (20) comprend une paire de feuilles élastiques (21) étendues à l'opposé de la base de fixation (11), l'au moins une bande de pression (40) est une paire, et la paire de bandes de pression (40) sont connectées séparément sur la paire de feuilles élastiques (21) et sont adjacentes à la base de fixation (11).

9. La structure d'essuie-glace (1) de la revendication 8, dans laquelle la bande de pression est située sur une extrémité de la feuille élastique (21), et la bande de pression (40) et la feuille élastique (21) sont formées d'une seule pièce.

10. La structure d'essuie-glace (1) de la revendication 1, dans laquelle la plaque de support (20) comprend une paire de feuilles élastiques (21) étendues de manière opposée à partir de la base de fixation (11), l'au moins une bande de pression (40) est une paire, et la paire de bandes de pression (40) sont reliées à une partie inférieure de la base de fixation (11) et sont situées sur deux côtés du cadre de fixation (11) de manière correspondante.
